# EUROPÄISCHE PATENTANMELDUNG

(11) **EP 2 829 747 A1**
(43) Veröffentlichungstag der Anmeldung: **28.01.2015**
(21) Anmeldenummer: 13177937.3
(22) Anmeldetag: 25.07.2013
(51) Int. Cl.: F16B 31/04

(54) **Befestigungsverfahren**

(71) Anmelder: HILTI Aktiengesellschaft, 9494 Schaan (LI)
(72) Erfinder: Foser, Thomas, 9496 Balzers (LI)
(74) Vertreter: Hilti Aktiengesellschaft Corporate Intellectual Property

(57) **Zusammenfassung**

Verfahren zur Befestigung eines ersten Gegenstands an einem zweiten Gegenstand mittels einer Befestigungsvorrichtung mit einem Anschlag und einem Zwischenelement. Bei dem Verfahren wird a) der zweite Gegenstand mit einer Aussparung versehen, welche bei einer vorbestimmten Tiefe T einen Gegenanschlag aufweist, b) der Schaft der Befestigungsvorrichtung so weit in die Aussparung eingeführt, bis der Anschlag an dem Gegenanschlag anliegt, so dass das Zwischenelement von dem Widerlager an den ersten oder zweiten Gegenstand angedrückt wird, c) die Befestigungsvorrichtung an dem zweiten Gegenstand befestigt, und d) der erste Gegenstand mittels der Befestigungsvorrichtung an dem zweiten Gegenstand befestigt.

## Beschreibung

### Technisches Gebiet

Die Erfindung betrifft ein Verfahren zur Befestigung eines ersten Gegenstandes an einem zweiten Gegenstand mittels einer Befestigungsvorrichtung.

### Stand der Technik

Bei derartigen Verfahren kommen häufig Schrauben, insbesondere selbstbohrende und/oder gewindeformende Schrauben, Nägel, Stifte, Nieten oder Gewindebolzen als Befestigungsvorrichtungen zur Anwendung. Für eine Abdichtung des Zwischenraums zwischen der Befestigungsvorrichtung und dem ersten beziehungsweise zweiten Gegenstand ist häufig ein Dichtelement vorgesehen, welches vor dem eigentlichen Befestigungsvorgang auf einen Schaft der Befestigungsvorrichtung aufgezogen wird. Ein üblicherweise als Kopf der Befestigungsvorrichtung ausgebildetes Widerlager soll das Dichtelement nach dem Befestigungsvorgang gegen den ersten beziehungsweise zweiten Gegenstand drücken, um die Abdichtung zu bewerkstelligen.

Wenn der Abstand zwischen dem Widerlager und dem ersten beziehungsweise zweiten Gegenstand nach dem Befestigungsvorgang zu gross ist, kann ein Spalt zwischen dem Dichtelement und dem ersten beziehungsweise zweiten Gegenstand verbleiben, so dass die Dichtwirkung nicht ausreichend ist. Unabhängig von einer Abdichtung ist unter Umständen die Eindringtiefe der Befestigungsvorrichtung in den zweiten Gegenstand nicht ausreichend, so dass die Befestigungsqualität leidet. Wenn der Abstand zwischen dem Widerlager und dem ersten beziehungsweise zweiten Gegenstand nach dem Befestigungsvorgang dagegen zu klein ist, wird das Dichtelement zu stark verpresst und kann beschädigt werden oder nach aussen herausquellen, so dass auch in diesem Fall die Dichtwirkung unter Umständen nicht ausreichend ist.

Aufgabe der Erfindung ist es, ein Verfahren der vorgenannten Art zur Verfügung zu stellen, mit welchem ein erster Gegenstand an einem zweiten Gegenstand zuverlässig abgedichtet befestigt werden kann.

### Darstellung der Erfindung

Die Aufgabe wird gelöst durch ein Verfahren zur Befestigung eines ersten Gegenstands an einem zweiten Gegenstand mittels einer Befestigungsvorrichtung mit einem Lastangriffsmittel zur Befestigung der Befestigungsvorrichtung an dem zweiten Gegenstand, einem das Lastangriffsmittel und einen Anschlag tragenden sowie eine Eintreibrichtung definierenden Schaft, wobei sich das Lastangriffsmittel von dem Anschlag entgegen der Eintreibrichtung über eine axiale Länge X erstreckt. Bei dem Verfahren wird a) der zweite Gegenstand mit einer Aussparung versehen, welche bei einer vorbestimmten Tiefe T einen Gegenanschlag aufweist, wobei die Tiefe T kleiner ist als die axiale Länge X, b) der Schaft der Befestigungsvorrichtung so weit in die Aussparung eingeführt, bis der Anschlag an dem Gegenanschlag anliegt, so dass die Befestigungsvorrichtung mittels des Lastangriffsmittels über die vollständige Tiefe T an dem zweiten Gegenstand befestigt wird, und c) der erste Gegenstand mittels der Befestigungsvorrichtung an dem zweiten Gegenstand befestigt.

Die Aufgabe wird ebenfalls gelöst durch ein Verfahren zur Befestigung eines ersten Gegenstands an einem zweiten Gegenstand mittels einer Befestigungsvorrichtung mit einem Lastangriffsmittel zur Befestigung der Befestigungsvorrichtung an dem zweiten Gegenstand, einem das Lastangriffsmittel und einen Anschlag tragenden sowie eine Eintreibrichtung definierenden Schaft, einem den Schaft umschliessenden Zwischenelement, und einem Widerlager zum Andrücken des Zwischenelements gegen den ersten oder zweiten Gegenstand, wobei das Widerlager gegenüber dem Anschlag in Richtung der Eintreibrichtung einen axialen Abstand L aufweist, und wobei das Zwischenelement im Bereich des Widerlagers eine axiale Dicke d aufweist. Bei dem Verfahren wird a) der zweite Gegenstand mit einer Aussparung versehen, welche bei einer vorbestimmten Tiefe T einen Gegenanschlag aufweist, wobei die Tiefe T um einen Differenzabstand kleiner ist als der axiale Abstand L, und wobei der Differenzabstand kleiner ist als die axiale Dicke d, b) der Schaft der Befestigungsvorrichtung so weit in die Aussparung eingeführt, bis der Anschlag an dem Gegenanschlag anliegt, so dass das Zwischenelement von dem Widerlager an den ersten oder zweiten Gegenstand angedrückt wird, c) die Befestigungsvorrichtung mittels des Lastangriffsmittels an dem zweiten Gegenstand befestigt, und d) der erste Gegenstand mittels der Befestigungsvorrichtung an dem zweiten Gegenstand befestigt. Dadurch ist sichergestellt, dass der Abstand zwischen dem Widerlager und dem ersten beziehungsweise zweiten Gegenstand kleiner ist als die axiale Dicke d des Zwischenelements im Bereich des Widerlagers, so dass Luftspalte, die zu einer Undichtigkeit führen könnten, vermieden sind.

Gemäss einer bevorzugten Ausgestaltung umfasst das Zwischenelement ein Dichtelement, besonders bevorzugt ein Elastomerelement. Besonders bevorzugt wird das Dicht- oder Elastomerelement unmittelbar von dem Widerlager gegen den ersten oder zweiten Gegenstand gedrückt. Gemäss einer alternativen Ausgestaltung umfasst das Zwischenelement ein Abdeckelement, welches das Dicht- oder Elastomerelement gegenüber dem Widerlager abdeckt. Das Zwischenelement wird dann mittelbar über das Abdeckelement gegen den ersten beziehungsweise zweiten Gegenstand gedrückt.

Gemäss einer bevorzugten Ausgestaltung umfasst das Widerlager einen Kopf, welcher an einem axialen Ende des Schafts angeordnet ist. Gemäss einer alternativen Ausgestaltung umfasst das Widerlager einen besonders bevorzugt umlaufenden Vorsprung, welcher von dem Schaft quer zu dessen Längsrichtung abragt.

Gemäss einer bevorzugten Ausgestaltung wird die Aussparung in den zweiten Gegenstand gebohrt. Besonders bevorzugt wird hierfür eine insbesondere elektrisch betriebene Bohrmaschine verwendet. Ebenfalls bevorzugt wird die Tiefe T mit Hilfe eines Anschlagbohrers vorbestimmt, welcher einen besonders bevorzugt als Schulter ausgebildeten Bohreranschlag aufweist. Der Bohrer wird so lange in den ersten und/oder zweiten Gegenstand eingetrieben, bis der Bohreranschlag an einer Oberfläche des ersten beziehungsweise zweiten Gegenstands anliegt. Die Tiefe der dann als Bohrloch ausgebildeten Aussparung ist dann so gross wie der Abstand des Bohreranschlags zur Bohrspitze des Anschlagbohrers. Gemäss einer alternativen Ausgestaltung wird die Tiefe T mit Hilfe eines Tiefenanschlags einer Bohrmaschine vorbestimmt.

Gemäss einer bevorzugten Ausgestaltung umfasst die Aussparung ein Sackloch. Besonders bevorzugt ist der Gegenanschlag durch den Grund des Sacklochs gebildet. Ebenfalls bevorzugt ist der Anschlag durch eine axiale Stirnseite des Schafts gebildet.

Gemäss einer bevorzugten Ausgestaltung umfasst die Befestigungsvorrichtung ein weiteres Lastangriffsmittel zur Befestigung des ersten Gegenstands an der Befestigungsvorrichtung, mittels dessen der erste Gegenstand an der Befestigungsvorrichtung befestigt wird. Besonders bevorzugt weist der Schaft das weitere Lastangriffsmittel auf, wobei das Widerlager in Richtung der Eintreibrichtung zwischen dem Anschlag und dem weiteren Lastangriffsmittel angeordnet ist.

### Ausführungsbeispiele

Die Erfindung wird nachstehend anhand von Ausführungsbeispielen unter Bezugnahme auf die Zeichnungen näher erläutert. Es zeigen:
- Fig. 1: eine an einem zweiten Gegenstand befestigte Befestigungsvorrichtung,
- Fig. 2: einen mittels einer Befestigungsvorrichtung an einem zweiten Gegenstand befestigten ersten Gegenstand, und
- Fig. 3: einen mittels einer Befestigungsvorrichtung an einem zweiten Gegenstand befestigten ersten Gegenstand.

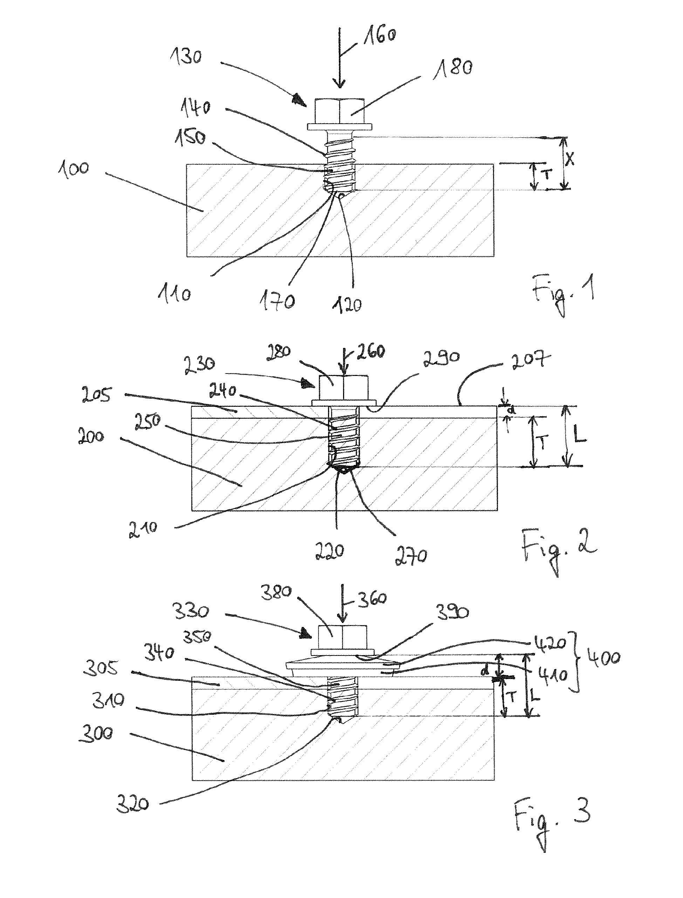

In Fig. 1 ist eine Platte 100 dargestellt, welche im Rahmen der Erfindung einen zweiten Gegenstand darstellt. Vorzugsweise umfasst oder besteht die Platte 100 aus Metall oder einer Legierung, insbesondere Stahl, oder Kunststoff oder Holz, und bildet bevorzugt eine Wand oder einen Boden beispielsweise eines Schiffes, einer Bohrinsel oder eines Industriegebäudes. Zur Befestigung eines ersten Gegenstands an der Platte 100 ist in die Platte 100 ein Sackloch 110 gebohrt, das bei einer Tiefe T einen Sacklochgrund 120 aufweist. In das Sackloch 110 ist eine als Schraube 130 ausgebildete Befestigungsvorrichtung mit einem Schaft 150, welcher ein als insbesondere selbstschneidendes Gewinde 140 ausgebildetes Lastangriffsmittel trägt, in einer Eintreibrichtung 160 eingeschraubt. Das Gewinde 140 erstreckt sich dabei von einer Stirnseite 170 des Schafts 150 über eine Länge X entgegen der Eintreibrichtung 160. Bei nicht gezeigten Ausführungsbeispielen ist die Befestigungsvorrichtung als Setz- oder Spreizbolzen ausgebildet, wobei dann das Lastangriffsmittel durch eine glatte oder aufgerauhte Umfangsfläche des Schafts gebildet ist.

Um die vollständige Tiefe T des Sacklochs 110 für einen Lastangriff des Gewindes 140 nutzbar zu machen, wird einerseits die Tiefe T gezielt vorbestimmt, indem das Sackloch 110 beispielsweise mit einem Anschlagbohrer oder mittels einer kraftbetriebenen Bohrmaschine mit Tiefenanschlag gebohrt wird. Andererseits ist bei der Auswahl der Schraube 130 darauf zu achten, dass die Länge X des Gewindes mindestens so gross ist wie die Tiefe T. Der Schaft 150 der Schraube 130 wird so weit in das Sackloch 110 einschraubt, bis die Stirnseite 170 an dem Sacklochgrund 120 anliegt. Die Stirnseite 170 wirkt dann als Anschlag und der Sacklochgrund 120 als Gegenanschlag, so dass die Schraube 130 mittels des Gewindes 140 über die vollständige Tiefe T an der Platte 100 befestigt wird. Dies ist besonders dann vorteilhaft, wenn der zweite Gegenstand in Eintreibrichtung nur eine geringe Dicke hat, so dass die verfügbare Tiefe der Aussparung begrenzt ist. Wenn wie bei einem typischen Bohrloch der Sacklochgrund 120 kegelförmig und die Stirnseite 170 eben ist, dient unter Umständen nur ein Rand der Stirnseite als Anschlag beziehungsweise ein Rand des Sacklochgrunds als Gegenanschlag. Grundsätzlich liegt der Anschlag flächen-, linien- oder punktförmig an dem Gegenanschlag an.

Anschliessend wird ein nicht dargestellter erster Gegenstand, beispielsweise ein Montageteil, an der Schraube 130 und damit an der Platte 100 befestigt, indem bevorzugt eine Öse, ein Haken oder eine Schlaufe des ersten Gegenstands über den Kopf 180 der Schraube 130 gelegt oder eingehängt wird. Der Kopf 180 weist einen beispielsweise als Aussensechskant ausgebildeten Aussenantrieb auf, mittels dessen die Schraube 130 in das Sackloch 110 eingetrieben wird, insbesondere mit einem bevorzugt kraftbetriebenen Schraubgerät, beispielsweise einem Akkuschrauber. Bei nicht dargestellten Ausführungsbeispielen weist der Kopf einen beispielsweise als Innensechskant ausgebildeten Innenantrieb auf. Die Gefahr von Beschädigungen einer gegebenenfalls vorhandenen Beschichtung auf der Platte 100 ist bei dem erfindungsgemässen Verfahren unter Umständen reduziert.

Bei nicht dargestellten Ausführungsbeispielen weist die Befestigungsvorrichtung ein weiteres Lastangriffsmittel zur Befestigung des ersten Gegenstands an der Befestigungsvorrichtung auf, welches zusätzlich oder alternativ zu dem Kopf am Kopf oder Schaft angeordnet ist und sich insbesondere entgegen der Eintreibrichtung erstreckt. Die Befestigungsvorrichtung ist beispielsweise als Schraubbolzen mit einem insbesondere metrischen Gewinde als weiterem Lastangriffsmittel ausgebildet, so dass der erste Gegenstand, beispielsweise ein Montageteil insbesondere mittels einer Schraubenmutter an die Befestigungsvorrichtung geschraubt und damit an dem zweiten Gegenstand befestigt wird. Bei weiteren nicht dargestellten Ausführungsbeispielen weist die Schraube ein den Schaft umschliessendes Zwischenelement auf, welches seinerseits ein Dichtelement, vorzugsweise ein Elastomerelement, und insbesondere ein Abdeckelement umfasst. Eine in Eintreibrichtung weisende Unterseite des Kopfes bildet vorzugsweise ein Widerlager zum Andrücken des Zwischenelements an die Platte. Das Zwischenelement wird dann zwischen dem Widerlager und der Platte festgeklemmt.

In Fig. 2 ist ein Träger 200 dargestellt, welcher im Rahmen der Erfindung einen zweiten Gegenstand darstellt, an dem ein erster Gegenstand in Form einer Platte 205 befestigt ist. Vorzugsweise umfassen oder bestehen der Träger 200 und/oder die Platte 205 aus Metall oder einer Legierung, insbesondere Stahl, oder Kunststoff oder Holz. Beispielsweise ist der Träger 200 Teil einer Gebäudekonstruktion und die Platte 205 Teil einer Aussenhülle des Gebäudes, insbesondere eine Fassaden- oder Dachplatte, beispielsweise ein Blech. Zur Befestigung der Platte 205 an dem Träger 200 wird die Platte 205 auf den Träger 200 aufgelegt und durch die Platte 205 hindurch ein Sackloch 210 in den Träger 200 gebohrt, das bei einer Tiefe T einen Sacklochgrund 220 aufweist. Durch die Platte 205 in das Sackloch 210 ist eine als Schraube 230 ausgebildete Befestigungsvorrichtung mit einem Schaft 250, welcher ein als insbesondere selbstschneidendes Gewinde 240 ausgebildetes Lastangriffsmittel trägt, in einer Eintreibrichtung 260 eingeschraubt. Bei nicht gezeigten Ausführungsbeispielen ist die Befestigungsvorrichtung als Steck- oder Spreizbolzen ausgebildet, wobei dann das Lastangriffsmittel durch eine glatte oder aufgerauhte Umfangsfläche des Schafts gebildet ist.

Die Schraube 230 weist einen Kopf 280 auf, welcher sich an den Schaft 250 entgegen der Eintreibrichtung anschliesst, und dessen in Eintreibrichtung weisende Unterseite ein Widerlager 290 zum Andrücken der Platte 205 an den Träger 200 bildet. Das Widerlager 290 weist gegenüber einer Stirnseite 270 des Schaftes 250 entlang der Eintreibrichtung 260 einen axialen Abstand L auf. Die Platte 205 umschliesst den Schaft 250 und weist im Bereich des Widerlagers 290 eine axiale Dicke d auf. Die Platte 205 ist zwischen dem Widerlager 290 und dem Träger 200 als Zwischenelement festgeklemmt und somit an dem Träger 200 befestigt.

Um sicherzustellen, dass die Platte 205 zwischen dem Widerlager 290 und dem Träger 200 festgeklemmt wird, wird einerseits die Tiefe T gezielt vorbestimmt, indem das Sackloch 210 beispielsweise mit einem Anschlagbohrer oder mittels einer kraftbetriebenen Bohrmaschine mit Tiefenanschlag gebohrt wird. Andererseits ist bei der Auswahl der Schraube 130 darauf zu achten, dass die Tiefe T um einen Differenzabstand kleiner ist als der axiale Abstand L, wobei der Differenzabstand kleiner ist als die axiale Dicke d. Um eine zu starke Verformung der Platte 205 oder eine Beschädigung der Oberfläche 207 der Platte 205 zu vermeiden, ist bei einem wenig verformbaren Material, wie beispielsweise Stahl, der Platte 205 ein Differenzabstand von mindestens 90%, bevorzugt mindestens 95%, besonders bevorzugt mindestens 98%, der axialen Dicke d vorteilhaft. Die Gefahr von Beschädigungen einer gegebenenfalls vorhandenen Beschichtung auf der Platte 205 ist bei dem erfindungsgemässen Verfahren unter Umständen reduziert.

Der Schaft 250 der Schraube 230 wird so weit in das Sackloch 210 einschraubt, bis die Stirnseite 270 des Schaftes 250 an dem Sacklochgrund 220 anliegt. Die Stirnseite 270 wirkt dann als Anschlag und der Sacklochgrund 220 als Gegenanschlag, so dass die Platte 205 von dem Widerlager 290 fest an den Träger 200 angedrückt wird. Wenn wie bei einem typischen Bohrloch der Sacklochgrund 220 kegelförmig und die Stirnseite 270 eben ist, dient unter Umständen nur ein Rand der Stirnseite als Anschlag beziehungsweise ein Rand des Sacklochgrunds als Gegenanschlag. Grundsätzlich liegt der Anschlag flächen-, linien- oder punktförmig an dem Gegenanschlag an.

Bei weiteren nicht dargestellten Ausführungsbeispielen weist die Befestigungsvorrichtung ein weiteres Lastangriffsmittel zur Befestigung des ersten Gegenstands an der Befestigungsvorrichtung auf, welches zusätzlich oder alternativ zu dem Kopf am Kopf oder Schaft angeordnet ist und sich insbesondere entgegen der Eintreibrichtung erstreckt. Die Befestigungsvorrichtung ist beispielsweise als Schraubbolzen mit einem insbesondere metrischen Gewinde als weiterem Lastangriffsmittel ausgebildet, so dass der erste Gegenstand, beispielsweise ein Montageteil insbesondere mittels einer Schraubenmutter an die Befestigungsvorrichtung geschraubt und damit an dem zweiten Gegenstand befestigt wird.

In Fig. 3 ist ein Träger 300 dargestellt, welcher im Rahmen der Erfindung einen zweiten Gegenstand darstellt, an dem ein erster Gegenstand in Form einer Platte 305 befestigt ist. Zur Befestigung der Platte 305 an dem Träger 300 wird die Platte 305 auf den Träger 300 aufgelegt und durch die Platte 305 hindurch ein Sackloch 310 in den Träger 300 gebohrt, das bei einer Tiefe T einen Sacklochgrund 320 aufweist. Durch die Platte 305 in das Sackloch 310 ist eine als Schraube 330 ausgebildete Befestigungsvorrichtung mit einem Schaft 350, welcher ein als insbesondere selbstschneidendes Gewinde 340 ausgebildetes Lastangriffsmittel trägt, in einer Eintreibrichtung 360 eingeschraubt. Die Schraube weist ein den Schaft 350 umschliessendes Zwischenelement 400 auf, welches seinerseits ein Dichtelement 410 und ein Abdeckelement 420 umfasst. Weiterhin weist die Schraube 330 einen Kopf 380 auf, welcher sich an den Schaft 350 entgegen der Eintreibrichtung 360 anschliesst, und dessen in Eintreibrichtung weisende Unterseite ein Widerlager 390 zum Andrücken des Zwischenelements 400 an die Platte 305 bildet. Das Widerlager 390 weist gegenüber einer Stirnseite 370 des Schaftes 350 entlang der Eintreibrichtung 360 einen axialen Abstand L auf. Das Zwischenelement 400 weist im Bereich des Widerlagers eine gesamte axiale Dicke d auf und ist zwischen dem Widerlager 390 und der Platte 305 festgeklemmt. Das Abdeckelement 420 deckt das Dichtelement 410 gegenüber dem Widerlager 390 ab, um das Dichtelement 410 vor zu grossen Kräften, insbesondere zu grosser Reibung am Widerlager, oder vor äusseren Einflüssen, insbesondere Witterungseinflüssen, zu schützen.

Um sicherzustellen, dass das Dichtelement 410 dichtend an der Platte 305 anliegt, wird einerseits die Tiefe T gezielt vorbestimmt, indem das Sackloch 310 beispielsweise mit einem Anschlagbohrer oder mittels einer kraftbetriebenen Bohrmaschine mit Tiefenanschlag gebohrt wird. Andererseits ist bei der Auswahl der Schraube 330 darauf zu achten, dass die Tiefe T um einen Differenzabstand kleiner ist als der axiale Abstand L, wobei der Differenzabstand kleiner ist als die axiale Dicke d. Um ein zu starkes Verpressen des Dichtelements 410 zu vermeiden, ist bei einem leicht verformbaren Material, wie beispielsweise einem Elastomer, des Dichtelements 410 ein Differenzabstand von mindestens 40%, bevorzugt mindestens 60%, besonders bevorzugt mindestens 80%, einer axialen Dicke des Dichtelements vorteilhaft. Der Schaft 350 der Schraube 330 wird so weit in das Sackloch 310 einschraubt, bis die Stirnseite 370 des Schaftes 350 an dem Sacklochgrund 320 anliegt. Die Stirnseite 370 wirkt dann als Anschlag und der Sacklochgrund 320 als Gegenanschlag, so dass das Zwischenelement 400 mit dem Dichtelement 410 von dem Widerlager 290 fest an die Platte 305 und die Platte 305 an den Träger 300 angedrückt wird. Damit ist die Platte 305 an dem Träger 300 befestigt. Wenn wie bei einem typischen Bohrloch der Sacklochgrund 320 kegelförmig und die Stirnseite 370 eben ist, dient unter Umständen nur ein Rand der Stirnseite als Anschlag beziehungsweise ein Rand des Sacklochgrunds als Gegenanschlag. Grundsätzlich liegt der Anschlag flächen-, linien- oder punktförmig an dem Gegenanschlag an. Die Gefahr von Beschädigungen einer gegebenenfalls vorhandenen Beschichtung auf der Platte 305 ist bei dem erfindungsgemässen Verfahren unter Umständen reduziert.

Bei nicht dargestellten Ausführungsbeispielen weist die Befestigungsvorrichtung ein weiteres Lastangriffsmittel zur Befestigung eines ersten Gegenstands, zusätzlich oder alternativ zu der Platte, an der Befestigungsvorrichtung auf, welches zusätzlich oder alternativ zu dem Kopf am Kopf oder Schaft angeordnet ist und sich insbesondere entgegen der Eintreibrichtung erstreckt. Bevorzugt ist das Widerlager als umlaufender Vorsprung oder Absatz ausgebildet, welcher von dem Schaft quer zur Eintreibrichtung abragt und eine in Eintreibrichtung weisende Stützfläche für das Dichtelement aufweist. Bevorzugt wird dann das Dichtelement zwischen der Stützfläche und dem ersten oder zweiten Gegenstand eingeklemmt, so dass eine axiale Abdichtung verwirklicht ist. Die Befestigungsvorrichtung ist beispielsweise als Schraubbolzen mit einem insbesondere metrischen Gewinde als weiterem Lastangriffsmittel ausgebildet, so dass der erste Gegenstand, beispielsweise ein Montageteil insbesondere mittels einer Schraubenmutter an die Befestigungsvorrichtung geschraubt und damit an dem zweiten Gegenstand befestigt wird.

Bei weiteren nicht dargestellten Ausführungsbeispielen wird die Aussparung als durchgehende Bohrung in dem zweiten Gegenstand gebildet und weist als Gegenanschlag einen nach innen ragenden, bevorzugt umlaufenden Vorsprung, einen Absatz oder eine Verengung auf. Bei ebenfalls nicht dargestellten Ausführungsbeispielen weist die Befestigungsvorrichtung als Anschlag einen quer zur Eintreibrichtung von dem Schaft abragenden, bevorzugt umlaufenden Vorsprung einen Absatz oder eine Verbreiterung auf.

Die Erfindung wurde anhand von Beispielen einer Vorrichtung zur Befestigung eines ersten Gegenstandes an einem zweiten Gegenstand sowie einem Verfahren für eine solche Befestigung beschrieben. Die Merkmale der beschriebenen Ausführungsformen sind dabei auch beliebig miteinander innerhalb einer einzigen Befestigungsvorrichtung beziehungsweise eines einzigen Herstellungsverfahrens kombinierbar. Es wird darauf hingewiesen, dass das erfindungsgemässe Verfahren auch für andere Zwecke geeignet ist.

## Patentansprüche

1. Verfahren zur Befestigung eines ersten Gegenstands an einem zweiten Gegenstand mittels einer Befestigungsvorrichtung mit einem Lastangriffsmittel zur Befestigung der Befestigungsvorrichtung an dem zweiten Gegenstand, einem das Lastangriffsmittel und einen Anschlag tragenden sowie eine Eintreibrichtung definierenden Schaft, wobei sich das Lastangriffsmittel von dem Anschlag entgegen der Eintreibrichtung über eine axiale Länge X erstreckt, wobei bei dem Verfahren a) der zweite Gegenstand mit einer Aussparung versehen wird, welche bei einer vorbestimmten Tiefe T einen Gegenanschlag aufweist, wobei die Tiefe T kleiner ist als die axiale Länge X, b) der Schaft der Befestigungsvorrichtung so weit in die Aussparung eingeführt wird, bis der Anschlag an dem Gegenanschlag anliegt, so dass die Befestigungsvorrichtung mittels des Lastangriffsmittels über die vollständige Tiefe T an dem zweiten Gegenstand befestigt wird, und c) der erste Gegenstand mittels der Befestigungsvorrichtung an dem zweiten Gegenstand befestigt wird.

2. Verfahren zur Befestigung eines ersten Gegenstands an einem zweiten Gegenstand mittels einer Befestigungsvorrichtung mit einem Lastangriffsmittel zur Befestigung der Befestigungsvorrichtung an dem zweiten Gegenstand, einem das Lastangriffsmittel und einen Anschlag tragenden sowie eine Eintreibrichtung definierenden Schaft, einem den Schaft umschliessenden Zwischenelement, und einem Widerlager zum Andrücken des Zwischenelements gegen den ersten oder zweiten Gegenstand, wobei das Widerlager gegenüber dem Anschlag in Richtung der Eintreibrichtung einen axialen Abstand L aufweist, und wobei das Zwischenelement im Bereich des Widerlagers eine axiale Dicke d aufweist, wobei bei dem Verfahren a) der zweite Gegenstand mit einer Aussparung versehen wird, welche bei einer vorbestimmten Tiefe T einen Gegenanschlag aufweist, wobei die Tiefe T um einen Differenzabstand kleiner ist als der axiale Abstand L, und wobei der Differenzabstand kleiner ist als die axiale Dicke d, b) der Schaft der Befestigungsvorrichtung so weit in die Aussparung eingeführt wird, bis der Anschlag an dem Gegenanschlag anliegt, so dass das Zwischenelement von dem Widerlager an den ersten oder zweiten Gegenstand angedrückt wird, c) die Befestigungsvorrichtung mittels des Lastangriffsmittels an dem zweiten Gegenstand befestigt wird, und d) der erste Gegenstand mittels der Befestigungsvorrichtung an dem zweiten Gegenstand befestigt wird.

3. Verfahren nach Anspruch 2, wobei der erste Gegenstand das Zwischenelement umfasst.

4. Verfahren nach Anspruch 2 oder 3, wobei das Zwischenelement ein Dichtelement umfasst.

5. Verfahren nach Anspruch 4, wobei das Dichtelement ein Elastomerelement umfasst.

6. Verfahren nach Anspruch 4 oder 5, wobei das Dichtelement unmittelbar von dem Widerlager gegen den ersten oder zweiten Gegenstand gedrückt wird.

7. Verfahren nach einem der Ansprüche 4 bis 6, wobei das Zwischenelement ein Abdeckelement umfasst, welches das Dichtelement gegenüber dem Widerlager abdeckt.

8. Verfahren nach einem der Ansprüche 2 bis 7, wobei das Widerlager einen Kopf umfasst, welcher an einem axialen Ende des Schafts angeordnet ist.

9. Verfahren nach einem der vorhergehenden Ansprüche, wobei die Aussparung in den zweiten Gegenstand gebohrt wird.

10. Verfahren nach Anspruch 9, wobei die Tiefe T mit Hilfe eines Anschlagbohrers vorbestimmt wird.

11. Verfahren nach einem der vorhergehenden Ansprüche, wobei die Tiefe T mit Hilfe eines Tiefenanschlags vorbestimmt wird.

12. Verfahren nach einem der vorhergehenden Ansprüche, wobei die Aussparung ein Sackloch umfasst.

13. Verfahren nach Anspruch 12, wobei der Gegenanschlag durch den Grund des Sacklochs gebildet ist.

14. Verfahren nach einem der vorhergehenden Ansprüche, wobei der Anschlag durch eine axiale Stirnseite des Schafts gebildet ist.
